# EUROPEAN PATENT APPLICATION

(11) **EP 4 848 196 A1**
(43) Date of publication of application: **02.12.2026**
(21) Application number: 26185887.2
(22) Date of filing: 17.06.2026
(51) Int. Cl.: G06T 3/4015, G06T 3/4046

(54) **METHOD FOR PROCESSING AN IMAGE**

(30) Priority: 25.06.2025 GB 202510189
(71) Applicant: Fotonation Limited, County Galway H91D1KH (IE)
(72) Inventor: Dinu, Dragos, N/A Brasov (RO)
(74) Representative: Boyce, Conor

(57) **Abstract**

A method for processing an image comprises the steps of: identifying a colour filter array, CFA, pattern of an input image; transforming kernel data for each layer of a convolutional neural network, CNN, configured to perform one or more tasks which are equivariant to rotation of the input image in accordance with the CFA pattern of the input image; and applying the CNN in accordance with the transformed kernel data to the input image to generate an output feature map.

## Description

### Field

The present invention relates to a method for processing an image.

### Background

A color filter array (CFA), or color filter mosaic (CFM), is a mosaic of color filters placed over the pixel sensors of an image sensor to enable the sensor to separate color information by wavelength range. For example, a Bayer filter gives information about the intensity of light in red, green, and blue (RGB) wavelength regions in respective filtered sensor pixels. The raw image data captured by the image sensor is converted to a full-color image (with intensities of all three primary colors represented at each pixel) by demosaicing the image information in accordance with the type of color filter.

Other variants of CFA sensor produce RGB and infra-red (IR) pixel planes and RGB and white (unfiltered) colour pixel planes.

Indeed, hyperspectral CFA sensors can produce more than 3 or 4 types of pixel planes which do not correspond with the primary colour bands.

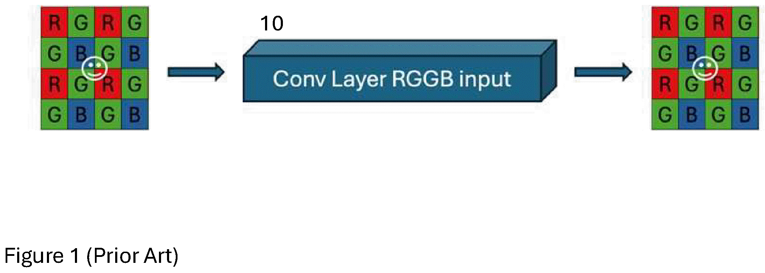

Referring to Figure 1, pixel information provided from different CFA sensors can have different patterns. In the case of the Bayer pattern of Figure 1, working from left-to-right, top-to-bottom, a pattern could comprise RGGB pixels, whereas other patterns are BGGR, GBRG and GRGB.

A convolutional neural network (CNN) 10 trained on images having one Bayer pattern, in this case RGGB, may not work properly with images having other patterns. The term convolutional neural network is used herein to denote a network including at least one layer applying a MxN pixel kernel across an input image or feature map to produce an output feature map. It will be appreciated that training and making available a variety of CNNs for processing images with different CFA patterns is both time and resource consuming.

There are possible solutions to this problem, for example, dropping a line and/or column from the input image before it is processed by the CNN:
- Dropping a first line and first column transforms a BGGR pattern to RGGB;
- Dropping a first line transforms a GBRG pattern to RGGB; and
- Dropping a first column transforms a GRBG pattern to RGGB.

While this converts any input Bayer pattern to RGGB (similar approaches can convert other CFA patterns into any other CFA pattern), the size of the original image is reduced. This may in turn require more than just 1 line and/or 1 column to be dropped, for example, where an input image for the neural network 10 needs to have a size corresponding to a multiple of 2, 4, 8, 16, 32, 64.

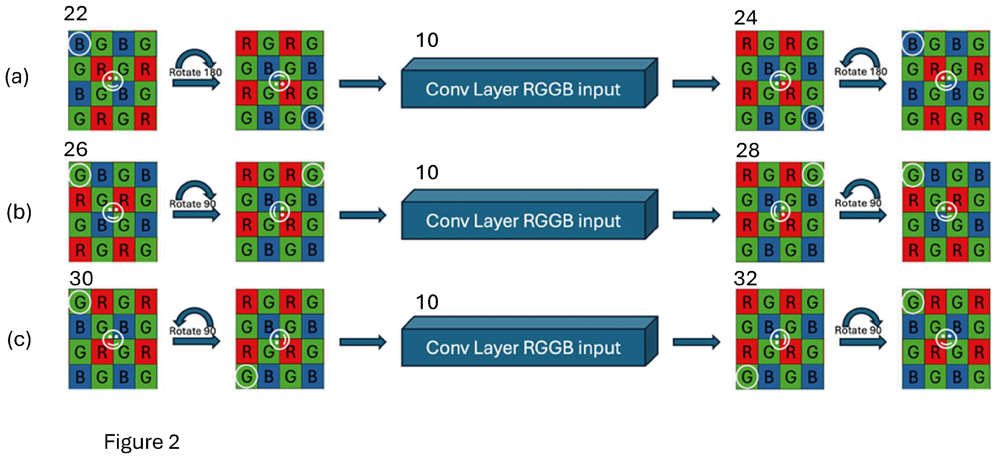

Referring to Figure 2, it is also possible to rotate an input image before it is provided to a trained network and to rotate any output image provided by the network, in order to provide images with a pattern for which the neural network has been trained:
- So, for a BGGR Bayer pattern image 22, the input image needs to be rotated 180 degrees clockwise to produce an RGGB pattern image and an output image 24 provided by the network needs to be rotated 180 degrees counterclockwise in order to be processed by a network 10 trained with RGGB images and to produce an output corresponding to the pattern of the input image 22.
- Similarly, for a GBRG Bayer pattern image, the input image 26 needs to be rotated 90 degrees clockwise and an output image 28 needs to rotated 90 degrees counterclockwise.
- Finally, for a GRBG Bayer pattern image, the input image 30 needs to be rotated 90 degrees counterclockwise and an output image 32 needs to be rotated 90 degrees clockwise.

However, rotating a potentially large input image, as well as an output image, in order to avoid the use of multiple differently trained networks catering for different input image patterns, would add significantly to the processing required and latency of any image processing system.

"Adaptive Rotated Convolution for Rotated Object Detection", Yifan Pu, Yiru Wang, Zhuofan Xia, Yizeng Han, Yulin Wang, Weihao Gan, Zidong Wang, Shiji Song, Gao Huang, arXiv:2303.07820 [cs.CV], 14 March 2023 discloses a module, where convolution kernels are rotated to extract object features with varying orientations in different images, along with a computation mechanism to accommodate the orientation variations of objects within an image. However, this relates to a problem with scene content rather than data formatting as in the present application.

Other approaches which address problems with rotations of scene content include "RIC-CNN: Rotation-Invariant Coordinate Convolution Neural Network", Hanlin Mo, Guoying Zhao, arXiv:2211.11812, 21 November 2022, which achieves natural invariance to arbitrary rotations around the input center without additional trainable parameters or data augmentation.

### Summary

According to the present invention, there is provided a method for processing an image according to claim 1.

In another aspect, there is provided an image signal processing pipeline (ISP) configured to perform the method of claim 1.

Embodiments of the invention are compatible with images obtained from a variety of periodic or rotationally or axially symmetric CFA patterns, such as a Bayer pattern array.

Embodiments of the invention are useful for image signal processing pipelines including neural networks trained to perform tasks which are equivariant to rotation of an input image, for example: correcting image artefacts, possibly resulting from sensor defects; image sharpening or deblurring; denoising; white balance adjustment; image enhancement; super-resolution or demosaicing and, as such, are ideal for inclusion in a neural network based ISP as discussed in US 2025/063261 (Ref: FN-697-US).

For some tasks, the network receives a CFA image and provides an equivalent processed CFA image as output, whereas in other cases, the output differs in semantics and/or resolution from the input, for example, where the network performs semantic segmentation.

However, the method is not suitable for networks trained for orientation dependent object detection or fully connected networks.

### Brief Description of the Drawings

Embodiments of the invention will now be described, by way of example, with reference to the accompanying drawings, in which:
Figure 1 illustrates a Bayer pattern image being processed by a typical convolutional neural network;
Figure 2 illustrates one possible solution to images with different patterns being provided from different sensors;
Figure 3 illustrates schematically the processing performed by an embodiment of the present invention;
Figure 4 illustrates a pixel unshuffle operation; and
Figure 5 illustrates convolutional kernels which can be applied to perform a pixel unshuffle operation in some embodiments of the present invention.

### Description of the Embodiments

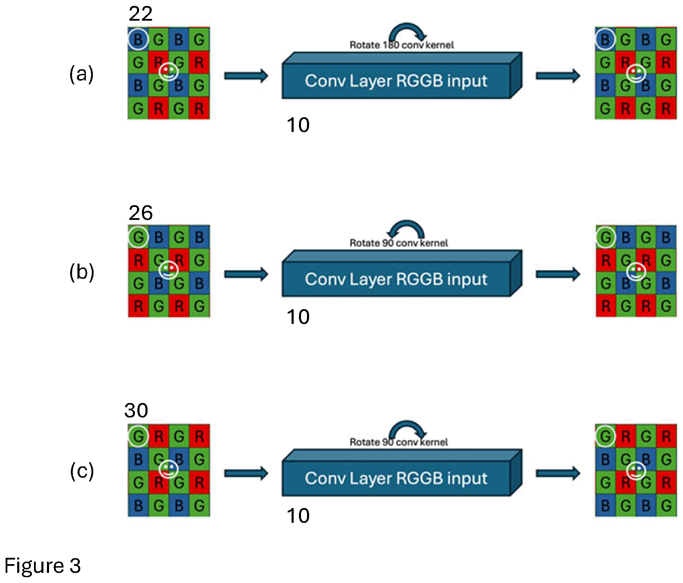

Referring now to the example of Figure 3, as in Figures 1 and 2, an image signal processing pipeline (ISP) includes a neural network 10 trained to receive RGGB Bayer pattern images and has been trained on such images. It will be appreciated however, that the network could be trained on other Bayer pattern images or indeed to process any other form of periodic or rotationally or axially symmetric CFA image pattern.

As mentioned above, the network 10 comprises convolutional layers and is trained to perform one or more tasks which are equivariant to rotation of the input image.

In the case of the network having been trained on RGGB Bayer pattern images, images with other Bayer patterns are processed as follows:
for a BGGR pattern image 22, all kernels for all convolutional layers of the network 10 are rotated 180 degrees clockwise;
for a GBRG pattern image 26, all kernels for all convolutional layer of the network 10 are rotated 90 degrees counterclockwise; and
for a GRBG pattern image 30, all kernels for all convolutional layer of the network 10 are rotated 90 degrees clockwise.

Rotation of the kernels can be performed in a number of ways. For example, kernel data can be transformed as per the above rotations with each rotated set saved and available to be applied to images as they are received by the ISP including the network 10.

Where images with different CFA patterns are provided to a given ISP, then kernel data from a single stored set of weight data can be rotated on-the-fly in accordance with the CFA pattern of the image; or alternatively, where the ISP is implementation in hardware, switch circuitry can be provided to flip kernel data as it is being applied in accordance with the CFA pattern of the image being processed.

In some cases, images will be provided to an ISP from only 1 type of sensor and as such only 1 set of kernel data then needs to be maintained. The invention is of course applicable where the kernel data has been rotated in order to make images provided by the sensor with one pattern compatible with a CNN which has been trained based on images with a different CFA pattern.

Note that in order to be rotated, kernels do not have to be square and the invention is applicable to networks including layers with MxN kernels where M≠N, and kernels where M or N are odd or even.

Using this approach, images provided from sensors in varying patterns can be processed with no additional overhead and by image signal processing pipelines including a neural network component which only needs to be trained once.

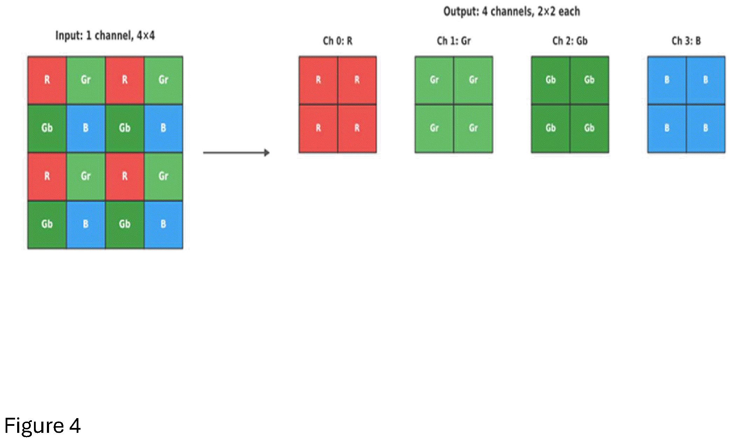

Variations of the above-described embodiment are possible. For example, rather than providing 1 single-channel Bayer image as input to a network, as described above, 4 half resolution channels can be provided by performing convolutions equivalent to a pixel unshuffle operation on the raw Bayer data. In Figure 4, an RGGB Bayer pattern image is indicated along with representations of the 4 channels derived from performing an unshuffle operation on this pattern. Similarly, when processing by a network of the 4 channel data is complete, a pixel shuffle operation can be performed in order to return the 4 channel data to a full resolution single-channel image.

Note that one reason for employing such a 4-channel approach is to reduce the spatial resolution of the image to be processed and to allow the channels to be processed in parallel, so increasing throughput.

Some neural network processing platforms may not provide unshuffle and shuffle operations and in this case, equivalent sets of convolution and transposed convolution operations having identity-like weights can be employed in order to achieve the same result as the above described modified unshuffle and shuffle operations.

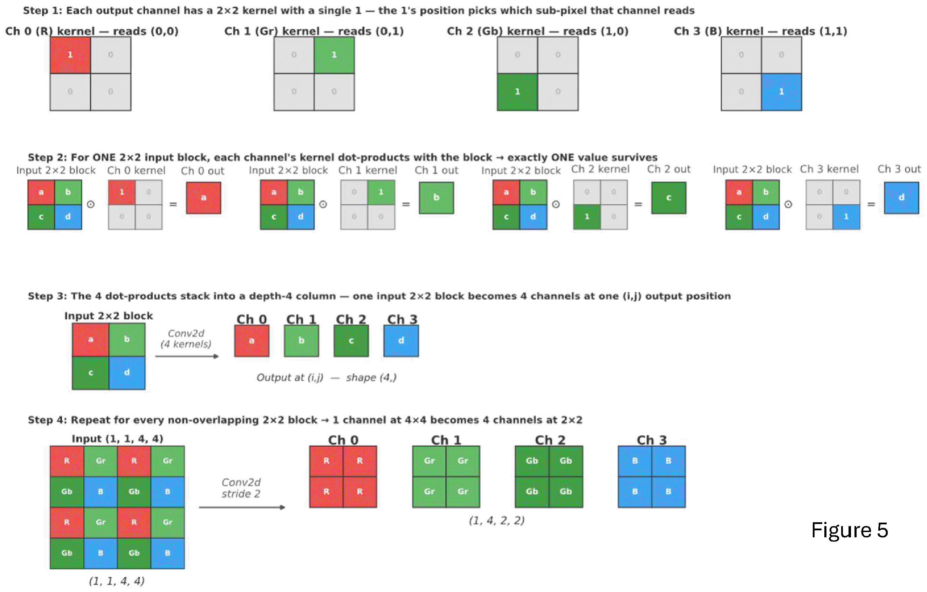

Referring now to Figure 5, the method is based on applying a set of 2x2 kernels, each with a single 1 in a different position of the kernel to a given image with a stride 2. Thus, at each position, each kernel will "pick-up" a different value from the input image. In the example, of Figure 5, kernel 0 has a one in position (0,0), top-left; kernel 1 has a one in position (0,1), top-right; kernel 2 has a one in position (1,0), bottom-left; and kernel 3 has a one in position (1,1), bottom-right.

Applying these kernels will produce 4 output images with half the resolution of the input image. The order in which the kernels are applied determines the order in which the output channels appear and are provided to the next layer of the network. In the case of Figure 5, the kernels are applied in order 0,1,2,3 to an RGGB image to produce the 4 separate R,G,G,B channels shown. Ordering the kernels as shown for the different color patterns in the table above will cause the channels to be ordered in the same manner as produced by the modified unshuffle operation.

At the output of the network, where again the kernel for each convolutional layer of the network is rotated as before, the 4 channels are subjected to a corresponding convolutional transpose operation to re-form the single full resolution output channel as before.

Finally, it is possible for the unshuffle equivalent operation at the input to a network to comprise 2 stages, where the input image is divided into 16 channels, with a corresponding 2 stage shuffle which reconstitutes a processed 16 channel image into a single image. In embodiments, the first 1:4 channel unshuffle equivalent stage and the 4:1 shuffle equivalent stage can operate as in any of the above-described embodiments. Again, using a higher number of input channels, each with a lower spatial resolution can enable the network to be processed by a more parallelized neural network processing platform so reducing latency.

## Claims

1. A method for processing an image comprising the steps of:
identifying a colour filter array, CFA, pattern of an input image;
transforming kernel data for each layer of a convolutional neural network, CNN, configured to perform one or more tasks which are equivariant to rotation of said input image in accordance with the CFA pattern of the input image; and
applying the CNN in accordance with the transformed kernel data to the input image to generate an output feature map.

2. The method of claim 1 wherein said CNN is trained based on images having a common CFA pattern, the method comprising rotating kernel data for an input image with a different CFA pattern by either: 180°, 90° counter-clockwise; or 90° clockwise, before applying the CNN to said input image.

3. The method of claim 2 wherein the CFA pattern is a Bayer pattern.

4. The method of claim 3 wherein the common pattern is a Bayer RGGB pattern and the different CFA patterns are Bayer BGGR, GBRG and GRBG respectively.

5. The method according to claim 1 wherein the one or more of the resolution or semantics of said feature map differ from said input image.

6. The method according to claim 5 wherein the CNN comprises a component of an image signal processing pipeline, ISP, configured to perform one or more of the following tasks: correcting image artefacts; image sharpening or deblurring; denoising; white balance adjustment; image enhancement; super-resolution; and demosaicing.

7. The method according to claim 5 wherein the CNN is configured to perform semantic segmentation of said input image.

8. The method of claim 1 further comprising:
after applying the convolutional layers of said CNN, reconstituting a single channel output feature map from a plurality of processed colour planes produced by the CNN in accordance with the CFA pattern of the input image.

9. The method of claim 8 further comprising dividing each of the plurality of colour planes into a respective plurality of lower resolution colour planes prior to applying the CNN.

10. An image signal processing pipeline, ISP, configured to perform the method of claim 1.
